# EUROPEAN PATENT SPECIFICATION

(11) **EP 1 708 568 B1**
(45) Date of publication and mention of the grant of the patent: **10.09.2014**
(21) Application number: 05707068.2
(22) Date of filing: 28.01.2005
(51) Int. Cl.: A01N 25/02, A01N 25/04, A01N 33/18, A01P 13/00

(54) **EMULSIFIABLE CONCENTRATE COMPRISING A DINITROANILINE COMPOUND**
EMULGIERBARES KONZENTRAT, DAS EINE DINITROANILINVERBINDUNG ENTHÄLT
CONCENTRE EMULSIFIABLE COMPRENANT UN COMPOSE DE DINITROANILINE

(30) Priority: 30.01.2004 US 540298 P
(43) Date of publication of application: 11.10.2006
(73) Proprietor: RHODIA CHIMIE, 92512 Boulogne Billancourt Cedex (FR)
(72) Inventor: GIOIA, Paul, Taylors Lakes, Victoria 3038 (AU)
(86) International application number: PCT/EP2005/000861
(87) International publication number: WO 2005/074683

(56) References cited:
- EP-A- 0 253 374
- EP-A- 0 496 989
- EP-A- 1 025 757
- WO-A-2004/077945
- US-A- 5 092 918

## Description

### BACKGROUND OF THEN INVENTION

The invention relates to an emulsifiable concentrate comprising an active ingredient being a dinitroaniline compound, preferably selected from the group consisting of pendimethalin, trifluralin and mixtures thereof. The emulsifiable concentrate of the invention avoids crystallization at low temperature when the concentration of the active ingredient is high.

Emulsifiable concentrates (EC) are liquid compositions comprising an active ingredient in a liquid form, for example an active ingredient having a biological effect on plants (agricultural active). Emulsifiable concentrates usually have a single phase. Emulsifiable concentrates are to be mixed with water, in order to obtain a direct emulsion having a liquid hydrophobic phase comprising the active ingredient dispersed in water. For example a farmer would mix an emulsifiable concentrate comprising a hydrophobic agricultural active with water and readily obtain an emulsion to be applied onto a field. This procedure, where the farmer prepares from a concentrated composition the final product to be applied onto a field, is usually referred to as a "tank mix" procedure. An emulsifiable concentrate is also referred to as a "tank mix" composition.

Pendimethalin and trifluralin are herbicide compounds. Emulsifiable concentrates comprising an active ingredient selected form the group consisting of pendimethalin, trifluralin and mixtures thereof are known. For example some emulsifiable concentrates comprising 330 g/l of pendimethalin, emulsifiers, and a solvent are known. However more concentrated pendimethalin crystallizes at low temperatures, in emulsion concentrates or when mixing with water is performed. The crystallization is characterized by formation of small solid particles of pendimethalin. These small particles have the bad impact of: filters clogging, nozzles clogging, creating unnecessary hazardous waste problems to dispose off the crystals, loss of activity, and/or bad repartition of the active on the field.

The invention relates to an emulsifiable concentrate avoiding to some extent crystallization problems, at pendimethalin and/or trifluralin concentrations of up to 435 g/l or even more.

WO2004/077945 discloses concentrated microemulsions comprising, in addition to surfactants, a pesticide, 8-25 parts by weight of a solvent containing oxygen atoms, having a flash point > 60 °C, solubility in water at 20°C lower than 5% by weight, the Hildebrand solubility parameter in the range 16-21 MPa ½, 12-20 parts by weight of a polyol soluble in water at 20°C and water.

EP1025757 discloses EC formulations comprising a pesticide, one non polar organic solvent, optionally at least one polar aprotic cosolvent, an emulsifying surfactant system and a specific defoaming or foam breaking agent.

US5,092,918 discloses granules containing herbicidal pyridinecarbothioate herbicides and the use of a diester of an alkylene dicarboxylic acid for inhibiting the crystallization of such herbicides in granular form.

None of these prior art documents teaches or suggests that a mixture of diisobutyl adipate, diisobutyl glutarate and diisobutyl succinate can be used as a solvent or a co-solvent in EC formulations containing an active ingredient bering a dinitroaniline compound.

### BRIEF SUMMARY OF THE INVENTION

The emulsifiable concentrate according to the invention comprises an active ingredient being a dinitroaniline compound, preferably selected from the group consisting of pendimethalin, trifluralin and mixtures thereof, an emulsifier or an emulsifier mixture, and a solvent, wherein it comprises (further to the solvent) an amount (preferably an effective amount) of a diester co-solvent having the following formula:

R¹OOC-(CH₂)ₙ-COOR²,

wherein:
- R¹ and R², identical or different, are C₁-C₁₀, preferably C₁-C₆, linear or branched, alkyl, aryl, alkaryl or arylalkyl groups, and
- n is an average number of from 2 to 4,
   with said diester co-solvent being a mixture of diisobutyl adipate, diisobutyl glutarate, and diisobutyl succinate.

The invention also relates to a method for preparing an emulsion of an active ingredient being a dinitroaniline compound, preferably selected from the group consisting of pendimethalin, trifluralin and mixtures thereof in water, comprising the step of mixing 1 part by volume of the emulsifiable concentrate, with at least 10 parts of water, preferably with at least 15 parts, for example 19 or 20 parts, by volume of water.

The invention also relates to an emulsion comprising:
- an active ingredient being a dinitroaniline compound, preferably selected from the group consisting of pendimethalin, trifluralin and mixtures thereof,
- an emulsifier or a mixture of emulsifiers,
- a solvent,
- a diester co-solvent having the following formula:

   R¹OOC-(CH₂)ₙ-COOR²,

   wherein:
   - R¹ and R², identical or different, are C₁-C₁₀, preferably C₁-C₆, linear or branched, alkyl, aryl, alkaryl or arylalkyl groups, and
   - n is an average number of from 2 to 4,
      with said diester co-solvent being a mixture of diisobutyl adipate diisobutyl glutarate, and diisobutyl succinate and
- water.

The emulsifiable concentrate according to the invention avoids crystallization problems at low temperature and/or at high level of actives, in the emulsifiable concentrate itself or when mixing with water. For example it can avoid crystallization problems at below 0°C and concentrations of up to 435 g/l, prior to mixing with water. The emulsifiable concentrate, the emulsions formed therefrom, and the emulsion according to the invention have moreover a good biological activity (selective herbicidal activity for destroying most annual grasses and many annual broad-level weeds) and/or a low toxicity.

### DETAILED DESCRIPTION OF THE INVENTION

### Pendimethalin

Pendimethalin is the usual denomination of a well-known herbicide dinitroaniline compound. Pendimethalin is actually N-(ethylpropyl)-3,4-dimethyl-2,6-dinitrobenzenamine.

### Trifluralin

Trifluralin is the usual denomination of a well-known herbicide dinitroaniline compound. Trifluralin is actually α,α,α-trifluoro-2,6-dinitro-*N,N-*dipropyl-*p*-toluidine.

### Diester co-solvent

The diester solvent has the following formula:

R¹OOC-(CH₂)ₙ-COOR²,

wherein:
- R¹ and R², identical or different, are C₁-C₁₀, preferably C₁-C₆, linear or branched, alkyl, aryl, alkaryl or arylalkyl groups, and
- n is an average number of from 2 to 4.

As n is an average number, the diester co-solvent is a mixture of several compounds having different numbers of -CH₂- groups.

The diester co-solvent is a mixture of adipate diesters (n=4), glutarate diesters (n=3), and succinate diesters (n=2).

The diester co-solvent is a mixture of diisobutyl adipate, diisobutyl glutarate, and diisobutyl succinate, for example a mixture comprising:
- from 59 to 67 parts by weight of diisobutyl glutarate,
- from 20 to 28 parts by weight of diisobutyl succinate, and
- from 9 to 7 parts by weight of diisobutyl adipate.

Examples of useful diester co-solvents include Rhodiasolv DIB ®, marketed by Rhodia. The diester co-solvents described above are considered as green solvent having a low Volatile Organic Compound behavior and/or a low toxicity.

Other interesting diester co-solvents include dimethyl adipate and mixutres of dimethyl adipate, dimethyl glutarate and dimethyl succinate.

The amount of the diester co-solvent in the emulsifiable concentrate is preferably of from 10 to 30 g/l, for example about 20 g/l.

### Emulsifiers

The emulsifier or mixture of emulsifiers is preferably selected from the group consisting of the following compounds:
- anionic surfactants such as alkylbezenesuflonates such as dodecylbenzenesulfonates, for example calcium dodecylbenzensulfonate, ethoxylated and/or propoxylated di- or tri-styrylphenol phosphates, ethoxylated and/or propoxylated di- or tri-styrylphenol sulfates, phenyl sulfonates, alkynaphtalenesulphonates, ethoxylated and/or propoxylated alcohol phosphate esters, ethoxylated and/or propoxylated alkylaryl phosphate esters, taurates, suphosuccinates, polycarboxylates,
- nonionic surfactants such as ethoxylated and/or propoxylated di- or tri-styrylphenols, ethoxylated and/or propoxylated fatty alcohols, ethoxylated and/or propoxylated fatty amines, ethoxylated and/or propoxylated alkylphenols such as ethoxylated nonylphenols, block copolymers having polypropylene glycol blocks and polyethylene glycol blocks, sorbitan esters, Ethoxylated oleic acids, ethoxylates castor oils, and
- mixtures thereof.

The emulsifier or mixture of emulsifier, and the amounts thereof, are such that an emulsifiable concentrate is obtained. This is known by the one skilled in the art of formulating the active ingredient. The emulsifiable concentrate typically comprises from 100 to 130 g/l of the emulsifier or mixture of emulsifiers.

Preferred mixtures of emulsifiers include mixtures of:
- at least 50g/l (relative to the emulsifiable concentrate), preferably from 55g/l to 65 g/l, for example 60 g/l, an of an alkaline metal or alkaline metal salts of dodecylbenzene sulfonic acid, such as calcium dodecylbenzene sulfonate (CaDDBS), for example Rhodacal 60/BE-C marketed by Rhodia, a 60% CaDDBS solution in ethylhexanol, or Rhodacal 70 marketed by Rhodia, a 60% CaDDBS solution in isobutanol, and
- at least 50g/l (relative to the emulsifiable concentrate), preferably from 55g/l to 65g/l, for example 60g/l, of alkylaryl ethylene oxide/propylene oxide block copolymers, for example Antharox 724/P marketed by Rhodia.

Other preferred mixtures of emulsifiers include mixtures of:
- at least 50g/l (relative to the emulsifiable concentrate), preferably from 54 g/l to 72 g/l, for example 66 g/l, an of an alkaline metal or alkaline metal salts of dodecylbenzene sulfonic acid, such as calcium dodecylbenzene sulfonate (CaDDBS), for example Rhodacal 60/BE-C marketed by Rhodia, a 60% CaDDBS solution in ethylhexanol, or Rhodacal 70 marketed by Rhodia, a 60% CaDDBS solution in isobutanol, and
- at least 40 g/l (relative to the emulsifiable concentrate), preferably from 48 g/l to 66 g/l, for example 54 g/l, of ethoxylated and/or propoxylated di- or tri-styrylphenols, preferably ehtoxylated and propoxylated tristyrylphenols, for example Soprophor TSP/724 marketed by Rhodia.

### Solvent

The emulsifiable concentrate comprises an organic solvent. Organic solvents suitable include aromatic hydrocarbon solvents such as toluene, xylenes, polynuclear aromatic hydrocarbons such as naphthalenes and alkylnaphthalenes and mixtures thereof, many of which are available from the fractionation of crude oil and it general have distillation ranges in the temperature range of about 135 °C to 305 °C, with those having a distillation range of from about 183 °C to 290 °C being most preferred. These solvents are commercially available under a variety of tradenames, e. g. SOLVESSO 200 and AROMATIC 200 both commercially available from Exxon, Fareham, Hants, United Kingdom. Organic solvent suitable also include esters of plant oils, cyclic amides and lactones.

### Other compounds

The emulsifiable concentrate according to the invention might comprise further ingredients, as follows.

The emulsifiable concentrate might comprise antifoaming agents. Antifoaming agents suitable for use in the compositions of the present invention include conventional antifoaming agents, with silicone based antifoaming agents such as those sold under the Silicolapse and tradenames commercially available from Rhodia, being preferred. In a preferred embodiment of the invention, an antifoaming agent is used at a level sufficient to prevent undesirable foaming during the preparation of tank mixes using the emulsion concentrates of the present invention. Typically, less than 1% by weight of a defoamer is sufficient, with amounts of about 0.01 to about 0.1% by weight being preferred.

The emulsifiable concentrate might comprise antigelation agents such as N-methylpyrrolidone, cyclohexanone, alcohols such as ethanol and methanol, glycols such as propylene glycol and ethylene glycol. These agents might be considered as the solvent or as a part thereof.

The emulsifiable concentrate of the invention might comprise further active ingredients such as other herbicides and pesticides. It is preferred that these further actives be soluble in the emulsifiable concentrate, thereby forming an emulsifiable concentrate combo. Examples of further active ingredients that might be useful include oxyacetamides herbicides.

### Process

The emulsifiable concentrate compositions of the present invention may be prepared by admixing all of the ingredients in the organic solvent. In a preferred embodiment of this invention, the compositions are prepared by a method comprising the following steps:
(a) admixing the active ingredient, for example pendimethalin in a molten form into the solvent,
(b) adding the emulsifier(s),
(c) optionally allowing cooling, and
(d) optionally filtering before packaging the emulsifiable concentrate.

A detailed preferred process comprises the following steps:
(a) admixing the organic solvent and the diester co-solvent into a mixing vessel with heating capabilities;
(b) adding a calcium dodecylbenzene sulfonate and a pre-molted alkylaryl ethylene oxide/propylene oxide (block) surfactant or an ethoxylated and/or propoxylated di- or tri-styrylphenol surfactant to the first homogenous mixture of step (a), with stirring to obtain a homogenous mixture;
(c) heating the mixture up to 50 degrees Celsius, prior adding a molten dinitroaniline, pendimethalin and/or trifluarin, whilst continue to stir the final mixture for approximately 0.5 hours;
(d) allowing the mixture to cool down to 30 degrees Celsius prior adding an antifoam and/or gelling agent to the mixture, if this is required;
(e) final mixture (d) is then allowed to stand overnight (temperature check to be below 30 degrees Celsius) prior passing through a 10 to 15 micron filter bag;
(f) if required, adding a secondary herbicide such as an oxyacetamide herbicide, to the homogenous mixture of step (c) with stirring to obtain a third homogenous mixture; and
(g) adding phosphoric acid to the third homogenous mixture of step (c) with stirring; completing with steps (d) and (e).

The emulsifiable concentrate compositions of this invention are diluted with water and applied as dilute, aqueous emulsions to the locus where weed control is desired. Typical dilution rates are in the range of about 1 part by volume of concentrate per at least 10 parts, preferably at least 15 parts, up to 500 parts, for example 19 or 20 parts. While the compositions of this invention are effective for controlling weeds when employed alone, they may also be used in conjunction with or in combination with other biological chemicals, including other herbicides.

### Performance

The emulsifiable concentrate according the invention is preferably such that the active ingredient, for example pendimethalin and/or trifluralin, does not crystallize at 0°C, preferably at -5°C, at a concentration of active ingredient of at least 330 g/l, preferably of at least 400 g/l, for example at a concentration of 435 g/l, and/or such that it does not crystallize at these temperatures upon dilution.

Crystallization tests can be performed on the emulsifiable concentrate by seeding and observing (eye observation or web 45 µm sieve residue).

Crystallization upon dilution tests can be performed on the emulsifiable concentrate by observing (eye observation or web 45 µm sieve residue).

### EXAMPLES

Concrete but non-limiting examples of the invention are presented below.

### Example 1: formulation according to the invention

| INGREDIENTS | g/L |
|---|---|
| Pendimethalin tech. 95% ae | 457.88 (435 g/L of active) |
| Antarox 724/P (Rhodia) | 60.00 |
| Rhodacal 60/BE-C (Rhodia) | 60.00 |
| Rhodiasolv DIB (Rhodia) | 20.00 |
| Solvesso 200 | to Vol (472.12 g used to reach volume) |

The formulation is prepared according to the detailed process described above, with cold filtering step (e) at about 25°C.

The formulation and a comparative formulation are tested (crystallization appearing depending on time and/or temperature). The results are presented on table I below. The comparative formulation, an emulsifiable concentrate having 330 g/l of pendimethalin, marketed by BASF as STOMP E 330.

**Table I**

| **Sample** | **Example 1** | **Comparative** |
|---|---|---|
| Emulsion in 1000 ppm Hard Water | Good bloom, Good emulsion → | Good bloom, Good emulsion → |
| | T0.5HRS → < 0.1 ml sd* | T0.5HRS → < 0.1 ml cr** |
| | T24HRS → 0.3 ml sd* | T24HRS → 0.4 ml cr** |
| 1 week at 2°C | No crystals | - |
| 2 week at 2°C | No crystals | No crystals |
| 2 week at 0°C | No crystals | No crystals |
| 2 week at -2°C | No crystals | No crystals |
| 1 week at -5°C | No crystals | Some very fine crystals forming a sludge |
| 2 week at -10°C | No crystals | Aborted (crystals) |
| 2 week at 54 °C | Physically stable | Physically stable |
| 8 week at 40 °C | Physically stable | Physically stable |
| 12 week at Room Temperature | Physically stable | Physically stable |
| 6 months at Room Temperature | Physically stable | Physically stable |

| | | |
|---|---|---|
| * sedimentation ** creaming | | |

### Example 2: formulation according to the invention

| INGREDIENTS | g/L |
|---|---|
| Pendimethalin tech. 95% ae | 457.88 (435 g/L of active) |
| Soprophor TSP 724/P (Rhodia) | 53.93 |
| Rhodacal 60/BE-C (Rhodia) | 61.91 |
| Rhodiasolv DIB (Rhodia) | 21.40 |
| Solvesso 200 | to Vol (472.83 g used to reach volume) |

The formulation is prepared according to the detailed process described above, with cold filtering step (e) at about 25°C.

## Claims

1. An emulsifiable concentrate comprising an active ingredient being a dinitroaniline compound, an emulsifier or an emulsifier mixture, and a solvent, wherein it comprises an amount of a diester co-solvent having the following formula:
R¹OOC- (CH2)ₙ-COOR²,
wherein:
- R¹ and R², identical or different, are C₁-C₁₀ linear or branched, alkyl, aryl, alkaryl or arylalkyl groups, and
- n is an average number of from 2 to 4,
wherein the diester co-solvent is a mixture of diisobutyl adipate, diisobutyl glutarate, and diisobutyl succinate.

2. An emulsifiable concentrate according to claim 1, wherein the active ingredient is selected from the group consisting of pendimethalin, trifluralin and mixtures thereof.

3. An emulsifiable concentrate according to claim 1 or 2, wherein the diester co-solvent comprises:
- from 59 to 67 parts by weight of diisobutyl glutarate,
- from 20 to 28 parts by weight of diisobutyl succinate, and
- from 9 to 7 parts by weight of diisobutyl adipate.

4. An emulsifiable concentrate according to one of the preceding claims, wherein the solvent is an aromatic hydrocarbon.

5. An emulsifiable concentrate according to any of the preceding claims, comprising:
- at least 330 g/l of the active ingredient,
- from 100 to 130 g/l of the emulsifier or mixture of emulsifiers,
- from 10 to 30 g/l of the diester co-solvent, and
- the solvent, to volume.

6. An emulsifiable concentrate according to the preceding claim, comprising from 400 g/l to 500 g/l of the active ingredient.

7. An emulsifiable concentrate according to one of the preceding claims, wherein the emulsifier or mixture of emulsifiers is selected from the group consisting of the following compounds:
- anionic surfactants,
- nonionic surfactants, and
- mixtures thereof.

8. An emulsifiable concentrate according to claim 7, wherein the anionic surfactants are alkylbezenesuflonates, ethoxylated and/or propoxylated di-or tri- styrylphenol phosphates, ethoxylated and/or propoxylated di-or tri-styrylphenol sulfates, phenyl sulfonates, alkynaphtalenesulphonates, ethoxylated and/or propoxylated alcohol phosphate esters, ethoxylated and/or propoxylated alkylaryl phosphate esters, taurates, suphosuccinates, polycarboxylates.

9. An emulsifiable concentrate according to claim 7, wherein the nonionic surfactants are ethoxylated and/or propoxylated di-or tri-styrylphenols, ethoxylated and/or propoxylated fatty alcohols, ethoxylated and/or propoxylated fatty amines, ethoxylated and/or propoxylated alkylphenols, block copolymers having polypropylene glycol blocks and polyethylene glycol blocks, sorbitan esters, ethoxylated oleic acids, ethoxylates castor oils.

10. An émulsifiable concentrate according to one of the preceding claims, wherein the mixture of emulsifiers comprises:
- at least 50g/l (relative to the emulsifiable concentrate) of an alkaline metal or alkaline metal salts of dodecylbenzene sulfonic acid, and
- at least 50g/l (relative to the emulsifiable concentrate)of alkylaryl ethylene oxide/propylene oxide block copolymers.

11. An emulsifiable concentrate according to claim 10, wherein the mixture of emulsifiers comprises :
- from 55 g/l to 65 g/l (relative to the emulsifiable concentrate) of calcium dodecylbenzene sulfonate, and
- from 55g/l to 65g/l (relative to the emulsifiable concentrate) of alkylaryl ethylene oxide/propylene oxide block copolymers.

12. An emulsifiable concentrate according to one of claims 1 to 7, wherein the mixture of emulsifiers comprises:
- at least 50 g/l (relative to the emulsifiable concentrate) of an alkaline metal or alkaline metal salts of dodecylbenzene sulfonic acid, and
- at least 40 g/l (relative to the emulsifiable concentrate)of ethoxylated and/or propoxylated di-or tri-styrylphenols.

13. An emulsifiable concentrate according to claim 12, wherein the mixture of emulsifiers comprises:
- from 54 g/l to 72 g/l (relative to the emulsifiable concentrate) of calcium dodecylbenzene sulfonate, and
- from 48 g/l to 66 g/l (relative to the emulsifiable concentrate) of ethoxylated and/or propoxylated di-or tri-styrylphenols.

14. An emulsifiable concentrate according to one of the preceding claims, wherein the active ingredient is pendimethalin and it does not crystallize at 0°C.

15. A method for preparing an emulsion in water of an active ingredient being a dinitroaniline compound comprising the step of mixing 1 part by volume of an emulsifiable concentrate according to one of the preceding claims, with at least 10 parts of water, and up to 500 parts by volume of water.

16. An emulsion comprising:
- an active ingredient being a dinitroaniline compound,
- an emulsifier or a mixture of emulsifiers,
- a solvent,
- a diester co-solvent having the following formula:
R¹OOC- (CH₂)ₙ-COOR²,
wherein:
- R¹ and R², identical or different, are C₁-C₁₀ linear or branched, alkyl, aryl, alkaryl or arylalkyl groups, and
- water,
wherein the diester co-solvent is a mixture of diisobutyl adipate, diisobutyl glutarate, and diisobutyl succinate.

17. An emulsion according to the preceding claim, wherein the active ingredient is selected from the group consisting of pendimethalin, trifluralin and mixtures thereof.

18. An emulsion according to claim 16 or 17, wherein the solvent is an aromatic hydrocarbon.

## Patentansprüche

1. Emulgierbares Konzentrat, umfassend einen Wirkstoff, bei dem es sich um eine Dinitroanilinverbindung handelt, einen Emulgator oder eine Emulgatormischung und ein Lösungsmittel, wobei es eine Menge eines Diester-Cosolvens mit der folgenden Formel umfasst:
R¹OOC- (CH2)ₙ-COOR², wobei:
- R¹ und R² gleich oder verschieden sind und für geradkettige oder verzweigte C₁-C₁₀-Alkyl-,-Aryl-, -Alkylaryl- oder -Arylalkylgruppen stehen, und
- n für eine durchschnittliche Zahl von 2 bis 4 steht,
wobei es sich bei dem Diester-Cosolvens um eine Mischung von Adipinsäurediisobutylester, Glutarsäurediisobutylester und Bernsteinsäurediisobutylester handelt.

2. Emulgierbares Konzentrat nach Anspruch 1, wobei der Wirkstoff aus der aus Pendimethalin, Trifluralin und Mischungen davon bestehenden Gruppe ausgewählt ist.

3. Emulgierbares Konzentrat nach Anspruch 1 oder 2, wobei das Diester-Cosolvens Folgendes umfasst:
- 59 bis 67 Gewichtsteile Glutarsäurediisobutylester,
- 20 bis 28 Gewichtsteile Bernsteinsäurediisobutylester und
- 9 bis 7 Gewichtsteile Adipinsäurediisobutylester.

4. Emulgierbares Konzentrat nach einem der vorhergehenden Ansprüche, wobei es sich bei dem Lösungsmittel um einen aromatischen Kohlenwasserstoff handelt.

5. Emulgierbares Konzentrat nach einem der vorhergehenden Ansprüche, umfassend:
- mindestens 330 g/l an Wirkstoff,
- 100 bis 130 g/l an Emulgator oder Emulgatormischung,
- 10 bis 30 g/l Diester-Cosolvens und
- das gewünschte volumen an Lösungsmittel.

6. Emulgierbares Konzentrat nach dem vorhergehenden Anspruch, welches 400 g/l bis 500 g/l an Wirkstoff umfasst.

7. Emulgierbares Konzentrat nach einem der vorhergehenden Ansprüche, wobei der Emulgator oder die Emulgatormischung ausgewählt ist aus der aus den folgenden Verbindungen bestehenden Gruppe:
- anionische Tenside,
- nichtionische Tenside und
- Mischungen davon.

8. Emulgierbares Konzentrat nach Anspruch 7, wobei es sich bei den anionischen Tensiden um Alkylbenzolsulfonate, ethoxylierte und/oder propoxylierte Di- oder Tristyrylphenolphosphate, ethoxylierte und/oder propoxylierte Di- oder Tristyrylphenolsulfate, Phenylsulfonate, Alkylnapthalin- sulfonate, ethoxylierte und/oder propoxylierte Alkoholphosphatester, ethoxy- lierte und/oder propoxylierte Alkylaryl- phosphatester, Taurate, Sulfosuccinate, Polycar-boxylate handelt.

9. Emulgierbares Konzentrat nach Anspruch 7, wobei es sich bei den nichtionischen Tensiden um ethoxylierte und/oder propoxylierte Di- oder Tristyrylphenole, ethoxylierte und/oder propoxylierte Fettalkohole, ethoxylierte und/oder propoxylierte Fettamine, ethoxylierte und/oder propoxylierte Alkylphenole, Blockcopolymere mit Polypropylenglykolblöcken und Polyethylenglykolblöcken, Sorbitanester, ethoxylierte Ölsäuren, ethoxylierte Rizinusöle handelt.

10. Emulgierbares Konzentrat nach einem der vorhergehenden Ansprüche, wobei die Emulgatormischung Folgendes umfasst:
- mindestens 50 g/l (bezogen auf das emulgierbare Konzentrat) eines Alkali- oder Erdalkalisalzes von Dodecylbenzolsulfonsäure und
- mindestens 50 g/l (bezogen auf das emulgierbare Konzentrat) an Alkylarylethylenoxid/propylenoxid-Blockcopolymeren.

11. Emulgierbares Konzentrat nach Anspruch 10, wobei die Emulgatormischung Folgendes umfasst:
- 55 g/l bis 65 g/l (bezogen auf das emulgierbare Konzentrat) an Calciumdodecylbenzolsulfonat und
- 55 g/l bis 65 g/l (bezogen auf das emulgierbare Konzentrat) an Alkylarylethylenoxid/Propylenoxid-Blockcopolymeren.

12. Emulgierbares Konzentrat nach einem der Ansprüche 1 bis 7, wobei die Emulgatormischung Folgendes umfasst:
- mindestens 50 g/l (bezogen auf das emulgierbare Konzentrat) eines Alkali- oder Erdalkalisalzes von Dodecylbenzolsulfonsäure und
- mindestens 40 g/l (bezogen auf das emulgierbare Konzentrat) an ethoxylierten und/oder propoxylierten Di- oder Tristyrylphenolen.

13. Emulgierbares Konzentrat nach Anspruch 12, wobei die Emulgatormischung Folgendes umfasst:
- 54 g/l bis 72 g/l (bezogen auf das emulgierbare Konzentrat) an Calciumdodecylbenzolsulfonat und
- 48 g/l bis 66 g/l (bezogen auf das emulgierbare Konzentrat) an ethoxylierten und/oder propoxylierten Di- oder Tristyrylphenolen.

14. Emulgierbares Konzentrat nach einem der vorhergehenden Ansprüche, wobei es sich bei dem Wirkstoff um Pendimethalin handelt und das Konzentrat bei 0°C nicht kristallisiert.

15. Verfahren zur Herstellung einer Emulsion eines Wirkstoffs, bei dem es sich um eine Dinitroanilinverbindung handelt, in Wasser, welches den Schritt des Mischens von einem Volumenteil eines emulgierbaren Konzentrats nach einem der vorhergehenden Ansprüche mit mindestens 10 Teilen Wasser und bis zu 500 Volumenteilen Wasser umfasst.

16. Emulsion, umfassend:
- einen Wirkstoff, bei dem es sich um eine Dinitro-anilinverbindung handelt,
- einen Emulgator oder eine Emulgatormischung,
- ein Lösungsmittel,
- ein Diester-Cosolvens mit der folgenden Formel:
R¹OOC- (CH2)ₙ-COOR²,
wobei:
- R¹ und R² gleich oder verschieden sind und für geradkettige oder verzweigte C₁-C₁₀-Alkyl-, -Aryl-, -Alkaryl- oder-Arylalkylgruppen stehen und
- Wasser,
wobei es sich bei dem Diester-Cosolvens um eine Mischung von Adipinsäurediisobutylester, Glutarsäurediisobutylester und Bernsteinsäurediisobutylester handelt.

17. Emulsion nach dem vorhergehenden Anspruch, wobei der Wirkstoff aus der aus Pendimethalin, Trifluralin und Mischungen davon bestehenden Gruppe ausgewählt ist.

18. Emulsion nach Anspruch 16 oder 17, wobei es sich bei dem Lösungsmittel um einen aromatischen Kohlenwasserstoff handelt.

## Revendications

1. Concentré émulsifiable, comprenant un ingrédient actif étant un composé de dinitroaniline, un émulsifiant ou un mélange d'émulsifiants, et un solvant, **caractérisé en ce qu'**il comprend une quantité de co-solvant de diester répondant à la formule suivante :
R¹OOC-(CH₂)ₙ-COOR², dans laquelle
- R¹ et R², identiques ou différents, sont des groupements alkyle, aryle, alkaryle ou arylalkyle en C₁-C₁₀ linéaires ou ramifiés, et
- n est un nombre moyen allant de 2 à 4,
**caractérisé en ce que** le co-solvant de diester est un mélange d'adipate de diisobutyle, de glutarate de diisobutyle et de succinate de diisobutyle.

2. Concentré émulsifiable selon la revendication 1, **caractérisé en ce que** l'ingrédient actif est choisi dans le groupe constitué par la pendiméthaline, la trifluraline et des mélanges de celles-ci.

3. Concentré émulsifiable selon la revendication 1 ou 2, **caractérisé en ce que** le co-solvant de diester comprend :
- de 59 à 67 parties en poids de glutarate de diisobutyle,
- de 20 à 28 parties en poids de succinate de diisobutyle, et
- de 9 à 7 parties en poids d'adipate de diisobutyle.

4. Concentré émulsifiable selon l'une des revendications précédentes, **caractérisé en ce que** le solvant est un hydrocarbure aromatique.

5. Concentré émulsifiable selon l'une quelconque des revendications précédentes, comprenant
- au moins 330 g/l de l'ingrédient actif,
- de 100 à 130 g/l de l'émulsifiant ou du mélange d'émulsifiants,
- de 10 à 30 g/l du co-solvant de diester, et
- le solvant, pour compléter le volume.

6. Concentré émulsifiable selon la revendication précédente, comprenant de 400 g/l à 500 g/l de l'ingrédient actif.

7. Concentré émulsifiable selon l'une des revendications précédentes, **caractérisé en ce que** l'émulsifiant ou le mélange d'émulsifiants est choisi dans le groupe constitué par les composés suivants :
- les agents tensioactifs anioniques,
- les agents tensioactifs non ioniques, et
- des mélanges de ceux-ci.

8. Concentré émulsifiable selon la revendication 7, **caractérisé en ce que** les agents tensioactifs anioniques sont des sulfonates d'alkylbenzène, des phosphates de di- ou tristyrylphénol éthoxylés et/ou propoxylés, des sulfates de di- ou tristyrylphénol éthoxylés et/ou propoxylés, des sulfonates de phényle, des sulfonates d'alkylnaphtalène, des esters de phosphate d'alcool éthoxylés et/ou propoxylés, des esters de phosphate d'alkylaryle éthoxylés et/ou propoxylés, des taurates, des sulfosuccinates, des polycarboxylates.

9. Concentré émulsifiable selon la revendication 7, **caractérisé en ce que** les agents tensioactifs non ioniques sont des di- ou tristyrylphénols éthoxylés et/ ou propoxylés, des alcools gras éthoxylés et/ou propoxylés, des amines grasses éthoxylées et/ou propoxylées, des alkylphénols éthoxylés et/ou propoxylés, des copolymères blocs ayant des blocs de polypropylène glycol et des blocs de polyéthylène glycol, des esters de sorbitane, des acides oléiques éthoxylés, des huiles de ricin éthoxylées.

10. Concentré émulsifiable selon l'une des revendications précédentes, **caractérisé en ce que** le mélange d'émulsifiants comprend
- au moins 50 g/l (par rapport au concentré émulsifiable) d'un métal alcalin ou de sels de métaux alcalino-terreux d'acide dodécylbenzènesulfonique, et
- au moins 50 g/l (par rapport au concentré émulsifiable) de copolymères blocs d'alkylaryl/oxyde d'éthylène/oxyde de propylène.

11. Concentré émulsifiable selon la revendication 10, **caractérisé en ce que** le mélange d'émulsifiants comprend
- de 55 g/l à 65 g/l (par rapport au concentré émulsifiable) de dodécylbenzènesulfonate de calcium, et
- de 55 g/l à 65 g/l (par rapport au concentré émulsifiable) de copolymères blocs d'alkylaryl/oxyde d'éthylène/oxyde de propylène.

12. Concentré émulsifiable selon l'une des revendications 1 à 7, **caractérisé en ce que** le mélange d'émulsifiants comprend
- au moins 50 g/l (par rapport au concentré émulsifiable) d'un métal alcalin ou de sels de métaux alcalino-terreux d'acide dodécylbenzènesulfonique, et
- au moins 40 g/l (par rapport au concentré émulsifiable) de di- ou tristyrylphénols éthoxylés et/ ou propoxylés.

13. Concentré émulsifiable selon la revendication 12, **caractérisé en ce que** le mélange d'émulsifiants comprend
- de 54 g/l à 72 g/l (par rapport au concentré émulsifiable) de dodécylbenzènesulfonate de calcium, et
- de 48 g/l à 66 g/l (par rapport au concentré émulsifiable) de di- ou tristyrylphénols éthoxylés et/ ou propoxylés.

14. Concentré émulsifiable selon l'une des revendications précédentes, **caractérisé en ce que** l'ingrédient actif est la pendiméthaline et il ne cristallise pas à 0°C.

15. Méthode de préparation d'une émulsion dans l'eau d'un ingrédient actif étant un composé de dinitroaniline, comprenant l'étape de mélange de 1 partie par volume d'un concentré émulsifiable selon l'une des revendications précédentes, avec au moins 10 parties d'eau, et jusqu'à 500 parties par volume d'eau.

16. Emulsion comprenant
- un ingrédient actif étant un composé de dinitroaniline,
- un émulsifiant ou un mélange d'émulsifiants,
- un solvant,
- un co-solvant de diester répondant à la formule suivante :
R¹OOC-(CH₂)ₙ-COOR²,
dans laquelle
- R¹ et R², identiques ou différents, sont des groupements alkyle, aryle, alkaryle ou arylalkyle en C₁-C₁₀ linéaires ou ramifiés, et
- de l'eau,
**caractérisée en ce que** le co-solvant de diester est un mélange d'adipate de diisobutyle, de glutarate de diisobutyle et de succinate de diisobutyle.

17. Emulsion selon la revendication précédente, **caractérisée en ce que** l'ingrédient actif est choisi dans le groupe constitué par la pendiméthaline, la trifluraline et des mélanges de celles-ci.

18. Emulsion selon la revendication 16 ou 17, **caractérisée en ce que** le solvant est un hydrocarbure aromatique.
